# EUROPEAN PATENT APPLICATION

(11) **EP 4 261 362 A1**
(43) Date of publication of application: **18.10.2023**
(21) Application number: 22305531.0
(22) Date of filing: 13.04.2022
(51) Int. Cl.: E04F 21/08, F16L 11/00

(54) **LOOSEFILL INSULATION HOSE CONNECTOR, LOOSEFILL INSUATION HOSE AND LOOSEFILL INSULATION INSTALLATION SYSTEM**

(71) Applicant: SAINT-GOBAIN ISOVER, 92400 Courbevoie (FR)
(72) Inventor: SACKS, Jeffrey, 19355 Malvern (US); LOMBARD, Pierre, 19355 Malvern (US); BHAMIDIPATI, Manju, 19355 Malvern (US); LEMBO, Michael, 19355 Malvern (US); WATKINS, Christian, 19355 Malvern (US); HARTZELL, Bruce, 19355 Malvern (US); LUIS, David, 92400 Courbevoie (FR)
(74) Representative: Saint-Gobain Recherche

(57) **Abstract**

The present disclosure relates generally to loose fill insulation installation systems, for example, suitable for installing loose fill insulation to an installation site. The present disclosure relates more particularly to a loose fill insulation hose including a plurality of tubular sections coupled together so as to form a conduit configured to convey loose fill insulation along a path from a blowing machine to an installation site. The tubular sections include a first hose section, a first connector section, and a second connector section. The first hose section includes a flexible body that forms an opening with a first cross-sectional area. The first connector section includes a plurality of projections that extend inward. The second connector section includes a constricted opening with a second cross-sectional area that is no more than 50% of the first cross-sectional area.

## Description

### BACKGROUND OF THE DISCLOSURE

### 1. Field of the Disclosure

The present disclosure relates generally to loose fill insulation installation systems, for example, suitable for installing loose fill insulation to an installation site. The present disclosure relates more particularly to a loose fill insulation hose operable to convey loose fill insulation from an insulation blowing machine.

### 2. Technical Background

Loose fill insulation is packaged in bags in which the material becomes compacted prior to storage and shipment. When removed from the bags, the insulation separates into clumps. In order to effectively install the insulation material, it is initially conditioned to increase its volume and to reduce its density. Traditionally, pneumatic devices are used to both install the insulation and perform the conditioning. The conditioning process breaks up clumps and alters the arrangement of the fibers so as to "open up' the insulation, conditioning the fiber to a more flake-like form. The conditioned insulation is then applied pneumatically to an area by blowing it through a hose connected to the pneumatic device. The insulation may be moistened and/or treated in the pneumatic device before installation.

While existing systems for installing loose fill insulation are effective, the present inventors have identified certain aspects of these systems that can be improved.

### SUMMARY OF THE DISCLOSURE

In one aspect, the present disclosure provides a loose fill insulation hose comprising a plurality of tubular sections coupled together so as to form a conduit configured to convey loose fill insulation along a path from a blowing machine to an installation site, the tubular sections comprising:
a first hose section extending from a proximal end to a distal end, the first hose section including a flexible body that surrounds the path and forms an opening with a first cross-sectional area;
a first connector section coupled to the first hose section, the first connector section comprising a first tubular body including a first interior surface that surrounds the path, wherein the first interior surface includes a major surface portion and a plurality of projections that extend inward from the major surface portion, wherein the projections are configured to open the loose fill insulation; and
a second connector section coupled to the first hose section, the second connector section comprising a second tubular body including a second interior surface that surrounds the path, the second interior surface including a constricted opening with a second cross-sectional area that is no more than 50% of the first cross-sectional area.

In another aspect, the disclosure provides a system for delivering loose fill insulation, the system comprising:
a loose fill insulation blowing machine comprising:
   a hopper configured to receive loose fill insulation,
   an outlet, and
   a blower operable to expel loose fill insulation through the outlet; and
a loose fill insulation hose according to the disclosure attached to the outlet of the loose fill insulation blowing machine.

In another aspect, the disclosure provides a method for delivering loose fill insulation to an installation site using the system of the disclosure, the method comprising:
expelling loose fill insulation from a blowing machine into the loose fill insulation hose; and
conveying the loose fill insulation through the loose fill insulation hose to the installation site.

In another aspect, the disclosure provides a connection module for a loose fill insulation hose, the connection module comprising:
a tubular body including an interior surface that surrounds a path for conveying loose fill insulation, wherein the interior surface includes a major surface portion and a series of annular projections along a length of the tubular body that extend inward from the major surface portion, wherein the major surface portion forms an opening having a first cross-sectional area, wherein the series of annular projections includes smaller projections and larger projections that extend into the path by a radial depth that is greater than the smaller projections, and wherein at least one of the larger projections forms a constricted opening with a second cross-sectional area that is no more than 50% of the first cross-sectional area.

Additional aspects of the disclosure will be evident from the disclosure herein.

### BRIEF DESCRIPTION OF THE DRAWINGS

The accompanying drawings are included to provide a further understanding of the methods and devices of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG. 1A is a schematic side view of a loose fill insulation system according to an embodiment of the disclosure;
FIG. 1B is a schematic front view of the loose fill insulation system of FIG. 1A;
FIG. 1 C is a schematic cross-sectional side view of a portion of the loose fill insulation hose of the system of FIG. 1A;
FIG. 1D is a schematic perspective view of a connection module show in the portion of the loose fill insulation hose of FIG. 1C;
FIG. 2 is a schematic cross-sectional side view of a portion of a loose fill insulation hose according to another embodiment of the disclosure;
FIG. 3 is a schematic cross-sectional side view of a portion of a loose fill insulation hose according to another embodiment of the disclosure;
FIG. 4A is a schematic cross-sectional view of a connection module according to an embodiment of the disclosure;
FIG. 4B is a schematic perspective view of the connection module of FIG. 4A; and
FIG. 5 is chart showing installation performance with several hose configurations.

### DETAILED DESCRIPTION

The present inventors have acknowledged that the internal geometries of loose fill insulation hoses can help open the loose fill insulation during installation, and improve the installation performance. Moreover, the inventors have identified that the internal geometry within one or more connectors attached to hose sections can provide such improved performance.

Accordingly, one aspect of the disclosure is a loose fill insulation hose that includes a plurality of tubular sections coupled together to form a conduit configured to convey loose fill insulation along a path from a blowing machine to an installation site. The tubular sections include a first hose section, a first connector section and a second connector section. The first hose section extends from a proximal end to a distal end and includes a flexible body that surrounds the path for the insulation. The flexible body of the first hose section forms an opening with a first cross-sectional area. The first and second connector sections are both coupled to the first hose section so as to form the continuous path for conveying insulation. The first connector section includes a first tubular body with a first interior surface that surrounds the path. The first interior surface of the first tubular body includes a major surface portion and a plurality of projections that extend inward from the major surface portion. The second connector section includes a second tubular body including a second interior surface that surrounds the path. The second interior surface includes a constricted opening with a second cross-sectional area that is no more than 50% of the first cross-sectional area.

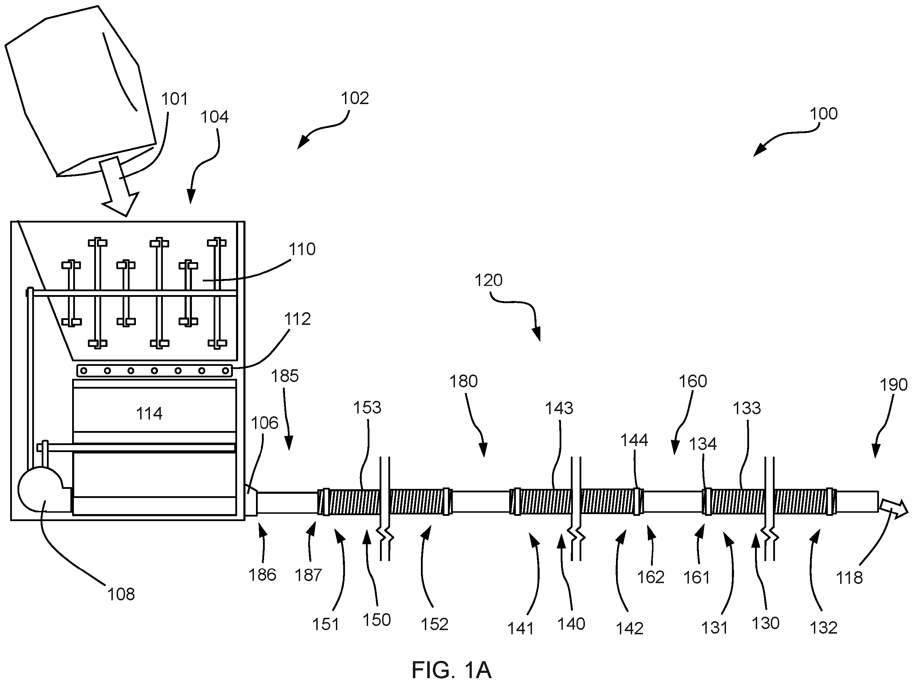

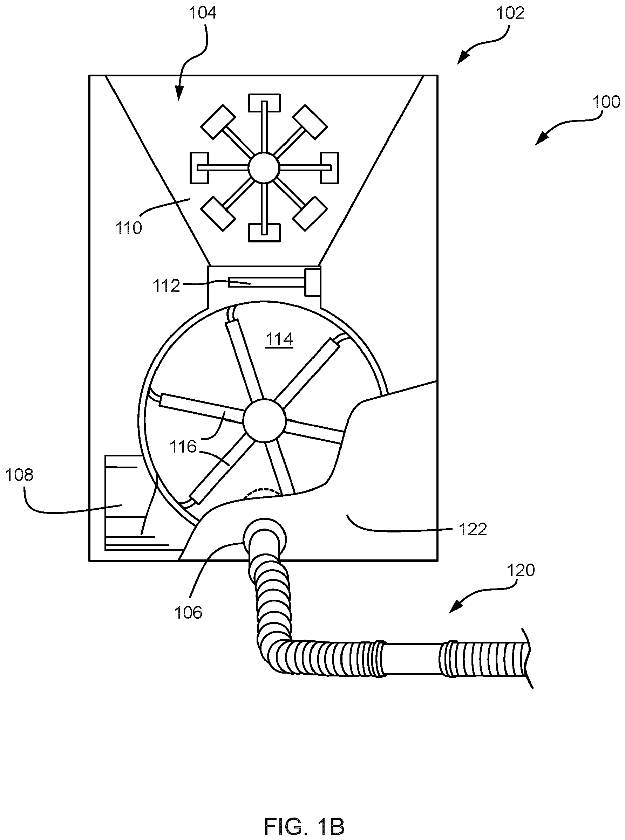

Such a loose fill insulation hose is schematically shown in FIGS. 1A and 1B as part of a loose fill insulation system. Loose fill insulation hose 120 includes several tubular sections coupled together to form a conduit for conveying loose fill insulation along a path from a blowing machine to an installation site. As used herein, the term coupled is not limited to direct connections between elements. Rather, two tubular sections may be coupled to one another indirectly by other sections such that both tubular sections form part of the same path for loose fill insulation. As shown in FIGS. 1A and 1B, loose fill insulation hose 120 includes a first hose section 130, a second hose section 140, and a third hose section 150 that are arranged in a sequence from a distal end of loose fill insulation hose 120 to a proximal end that attaches to the blowing machine. First hose section 130 includes a flexible body 133 that extends from a proximal end 131 to a distal end 132. Similarly, second hose section 140 includes a flexible body 143 that extends from a proximal end 141 to a distal end 142, and third hose section 150 includes a flexible body 153 that extends from a proximal end 151 to a distal end 152.

Loose fill insulation hose 120 also includes several connection modules, such as connection module 160 between first hose section 130 and second hose section 140, and connection module 180 between second hose section 140 and third hose section 150.

In the embodiment of loose fill insulation hose 120, as shown in FIG. 1A, the hose sections are attached to the connection modules using clamps. For example, first hose section 130 is coupled to connection module 160 using a clamp 134 that surrounds first hose section 130 and fastens the first hose section 130 to the connection module 160. Similarly, second hose section 140 is coupled to the opposite side of connection module 160 using another clamp 144. On the other hand, in some embodiments, the hose sections include end fittings that are configured to attach to the connection modules. Other methods of securing the hose sections to the connection modules are also possible.

In embodiments of the loose fill insulation hose, the connection modules include various sections. As explained in further detail below, at least one of the connection modules includes a section with projections, and at least one of the connection modules includes a constricted opening. In some embodiments, the loose fill insulation hose has a connection module that includes both of these types of connector sections. In other embodiments, the loose fill insulation hose includes a first connection module with a section that includes projections and a second connection module with a section that includes a constricted opening. Further, in some embodiments, the loose fill insulation hose includes a connection module that has both of these sections and a connection module that has only one of these sections. Further still, in some embodiments, the loose fill insulation hose includes other types of connector sections, such as simple tubular sections.

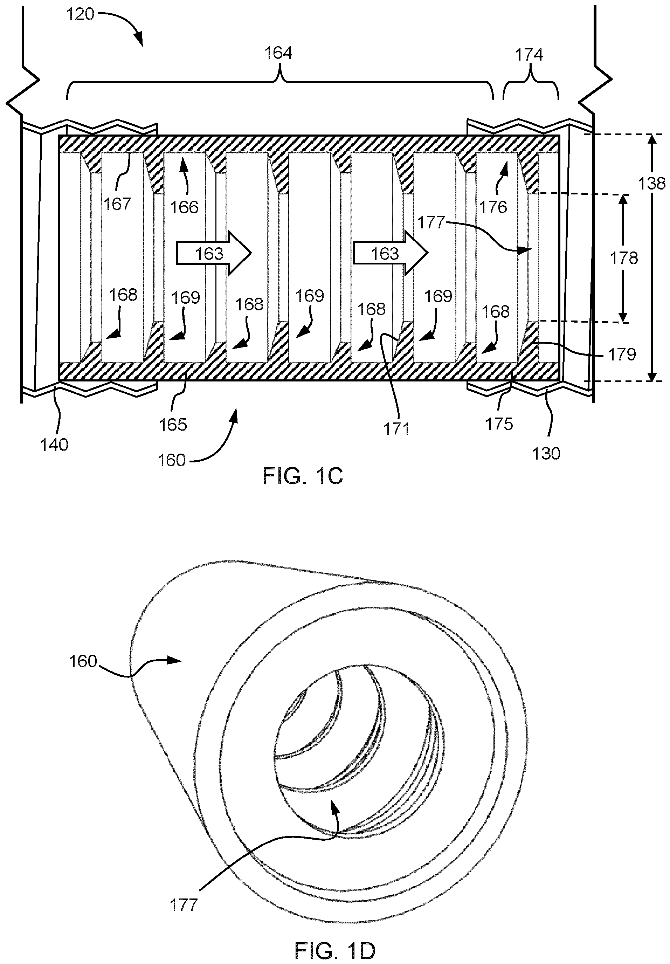

FIG. 1C illustrates a section of loose fill insulation hose 120 that includes connection module 160 positioned between first hose section 130 and second hose section 140. FIG. 1D shows a perspective view of connection module 160. As shown in FIG. 1C, in the embodiment of loose fill insulation hose 120, connection module 160 includes a first connector section 164 and a second connector section 174.

First connector section 164 includes a tubular body 165 with an interior surface 166 that surrounds the path 163 for the conveyed loose fill insulation. Interior surface 166 has a major surface portion 167 that defines the outer portion of the conduit through tubular body 165. A plurality of projections 168, 169 extend radially inward from major surface portion 167 into the path 163. The projections 168, 169 are configured to open the loose fill insulation as it travels through connection module 160. As air flowing through the hose carries the loose fill insulation through connection module 160, fibers or particles of the loose fill insulation may catch on the projections 168, 169 and be pulled open or apart.

Second connector section 174 includes a second tubular body 175 with a second interior surface 176 that surrounds the path 163. The second interior surface 176 includes a constricted opening 177 with cross-sectional area that is substantially less than the cross-sectional area of the first hose section 130. For example, as shown in FIG. 1C, the cross-sectional area of the constricted opening 177 is defined by the diameter 178 while the cross-sectional area of the first hose section 130 is defined by the diameter 138 of the first hose section 130. In some embodiments the, the cross-sectional area of the constricted opening is no more than 50% of the cross-sectional area of the first hose section, e.g. no more than 40% of the cross-sectional area of the first hose section, e.g., no more than 30% of the cross-sectional area of the first hose section, no more than 20% of the cross-sectional area of the first hose section. By reducing the size of path 163 through connection module 160, constricted opening 177 causes air passing through connection module 160 to accelerate, which may increase turbulence and help condition the loose fill insulation flowing through connection module 160.

In certain embodiments of the loose fill insulation hose as otherwise described herein, the opening formed by the tubular body of the first hose section is circular and has a first diameter, the constricted opening of the interior surface of the second connector section is circular and has a second diameter, and the second diameter is no more than 70% of the first diameter, e.g., no more than 65% of the first diameter, e.g., no more than 62% of the first diameter, e.g., no more than 50% of the first diameter, e.g. no more than 40% of the first diameter. For example, in the embodiment shown in FIGS. 1A-1D, the tubular body 133 of first hose section 130 has a circular cross section such that the cross-sectional opening through the first hose section 130. Accordingly, the area of the opening that is formed by tubular body 133 is defined by the diameter 138 of first hose section 130, as shown in FIG. 1C. Similarly, as shown in FIG. 1D, the constricted opening 177 of connection module 160 is also circular. As a result, the area of the constricted opening 177 is defined by diameter 178 (see FIG. 1C) of constricted opening 177.

In other embodiments, the constricted opening is not circular. For example, in some embodiments, the constricted opening is formed by a slot. In other embodiments, the constricted opening is the result of various projections around the circumference of the tubular body, such that the constricted opening has the shape of a gear or star. Other shapes are also possible. The area of the constricted opening, as described herein, is determined at a particular location along the length of the connector section and based on the cross-section of the opening at that location.

In certain embodiments of the loose fill insulation hose as otherwise described herein, the plurality of projections of the first connector section includes a series of annular projections along a length of the first connector section. For example, each of the projections 168, 169 of first connection section 164 of connection module 160 is formed as an annular ring that encircles path 163 and extends radially inward from interior surface 166 around the circumference of tubular body 175. The projections 168, 169 are spaced at regular intervals along the length of first connector section 164. In other embodiments, the spacing along the length of the first connector section is irregular. Further, in some embodiments, the projections are not annular and have other shapes and forms. For example, the projections may be formed as spikes, as explained in more detail below. Further the projections may have various different shapes, such as square, triangular, round, or other shapes, including randomly configured shapes.

In certain embodiments of the loose fill insulation hose as otherwise described herein, the series of annular projections includes smaller projections that extend into the path by a first radial depth and larger projections that extend into the path by a second radial depth that is greater than the first radial depth. For example, connection module 160 includes a group of larger projections 169 that extend into path 163 by about 25% of the diameter of major surface portion 167, and a group of smaller projections 168 that extend radially inward about half the distance of larger projections 169. The use of both larger and smaller projections may help increase turbulence of the air flowing through connection module 160, which can assist in conditioning loose fill insulation travelling through the hose.

In certain embodiments of the loose fill insulation hose as otherwise described herein, the smaller projections and larger projections alternate along the length of the first connector section. For example, the smaller projections 168 of first connector section 164 of connection module 160 are interspersed between the larger projections 169. This repeated change in diameter may also increase turbulence within connection module 160. In other embodiments, the smaller and larger projections are arranged in a different pattern. For example, in some embodiments, the first connector section includes a greater number of smaller projections upstream and greater number of larger projections downstream. On the other hand, in other embodiments the first connector section includes a greater number of smaller projections downstream.

In certain embodiments of the loose fill insulation hose as otherwise described herein, at least some of the annular projections are tapered so as to have a reduced thickness at a radially inner edge. For example, in some embodiments, the upstream surface of the projections has a conical shape such that the projection narrows toward the center of the connection module. For example, each of the projections 168, 169 of tapered annular projections include a conical upstream surface as demonstrated by surface 171 in FIG. 1C. The conical shape of the upstream surface of projections 168 and 169 can help direct the flow through connection module 160 by angling toward the open center of the tubular body 165. While the projections 168, 169 of connection module have a flat downstream surface, in other embodiments, the projections include conical surfaces on both sides, such that the projections may be symmetric.

In certain embodiments of the loose fill insulation hose as otherwise described herein, each of the larger projections has the same geometry. Likewise, in some embodiments each of the smaller projections has the same geometry. For example, in first connector section 164, each of the larger projections 169 have the same geometry and each of the smaller projections 168 also have the same geometry. In other embodiments, the projections have different shapes and sizes. For example, in some embodiments, the first connector section includes smaller projections with a range of radial depths that vary but are all below a threshold depth, and larger projections with a range of radial depths that are all above the threshold depth. Such projections may have similar shapes or different shapes.

In certain embodiments of the loose fill insulation hose as otherwise described herein, the constricted opening of the second connector section is formed by a circumferential projection that extends inward into the path and has the same geometry as the larger projections of the first connector section. For example, in connection module 160, constricted opening 177 of second connector section 174 is formed by a circumferential projection 179 that has the same geometry as each of the larger projections 169 of first connector section 164.

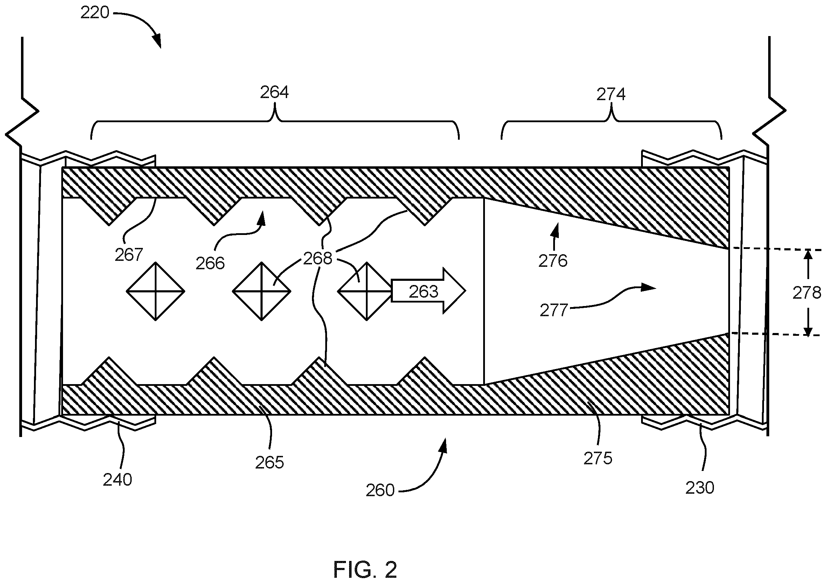

In other embodiments, the constricted opening of the second connector section has a different geometry from any of the projections of the first connector section. Such an embodiment is shown in FIG. 2. Connection module 260 is part of loose fill insulation hose 220 and is connected between a first hose section 230 and a second hose section 240. Connection module 260 includes a first connector section 264 that is formed by a tubular body 265 that surrounds a path 263 extending through connection module 260. Tubular body 265 has an interior surface 266 that includes a major surface portion 267, which defines the outer dimension of the path 263. The interior surface 266 of first connector section 264 also includes a plurality of projections 268 that extend radially inward into path 263. In contrast to the annular projections of connection module 160, the projections 268 of connection module 260 are formed as spikes that extend into the flow path. It will be appreciated that in various embodiments of the connection modules, the projections can cause the flow of material to take on a path directed by the flow generated, and as such may impart a spin or tumble, that can modify the turbulence being experienced by the loose fill insulation particles.

Connection module 260 also includes a second connector section 274 including a tubular body 270 with an interior surface 276 that narrows to a constricted opening 277. The constricted opening 277 has a reduced diameter 278 compared to the diameter of the first hose section 230 and second hose sections 230.

In certain embodiments of the loose fill insulation hose as otherwise described herein, the first connector section and the second connector section are part of the same connection module. For example, as shown in FIG. 1C, connection module 160 includes both first connector section 164 including projections 168 and 169 as well as second connector section 174 including constricted opening 177. Furthermore, in connection module 160, the tubular body 165 of first connector section 164 is formed in a single integral piece with the tubular body 175 of second connector section 174.

Likewise, as shown in FIG. 2, connection module 260 includes both first connector section 264 and including projections 268 and second connector section 274 including constricted opening 277. Again, the tubular body 265 of first connector section 264 is formed in a single integral piece with the tubular body 275 of second connector section 274. In other embodiments, the first and second connector sections are coupled to one another in a single connection module without being integrally formed. For example, the first connector section may interlock with the second connector section to form a combined connection module.

In some embodiments, the second connector section is downstream of the first connector section. For example, in connection module 160, second connector section 174 including constricted opening 177 is downstream of first connector section 164. Likewise, in connection module 260, second connector section 274 is downstream of first connector section 264. In other embodiments, the second connector section is upstream of the first connector section. For example, in some embodiments, the connection module includes a connector section with a plurality of projections downstream of a connector section with a constricted opening.

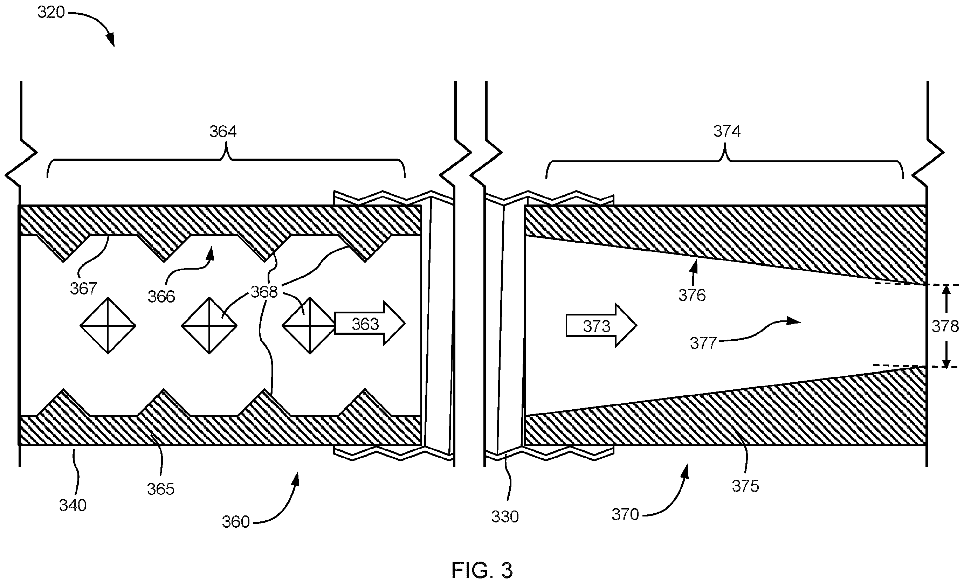

While the first and second connector sections may be provided in the same connection module, as in connection module 160 and connection module 260, in other embodiments, the first connector section and second connector sections are provided in separate connection modules. A portion of such a loose fill insulation hose is shown in FIG. 3. Loose fill insulation hose 320 includes a first connection module 360 attached to a proximal end of a first hose section 330 and a second connection module 370 attached to the distal end of first hose section 330. Connection module 360 includes a first connector section 364 that is formed by a tubular body 365 that surrounds a path 363 extending through connection module 360. Tubular body 365 has an interior surface 366 that includes a major surface portion 367, which defines the outer dimension of the path 363. The interior surface 366 of first connector section 364 also includes a plurality of projections 368 that extend radially inward into path 363.

Connection module 370 includes a second connector section 374. Second connector section 374 includes a tubular body 375 that surrounds a path 373 extending through connection module 370. Tubular body 375 has an interior surface 376 that narrows to a constricted opening 377. The constricted opening 377 has a reduced diameter 378 compared to the diameter of the first hose section 330.

In some embodiments, the second connection module is downstream of the first connection module. For example, in loose fill insulation hose 320, second connection module 370 including second connector section 374 with constricted open 377 is downstream of first connection module 360 with first connector section 364. In other embodiments, the second connection module is upstream of the first connection module.

The first and second connectors sections of the loose fill insulation hose may be positioned in connection modules at various locations along the loose fill insulation hose. For example, in loose fill insulation hose 120, as shown in FIGS. 1A-1C, both the first connector section 164 and second connector section 174 are located in first connection module 160, which is between first hose section 130 and second hose section 140 near the distal end of hose 120. In other embodiments, the first and second connector section may be located in a connection module between other pairs of hose sections along the length of the hose, or in separate connection modules, as explained above.

In certain embodiments of the loose fill insulation hose as otherwise described herein, the loose fill insulation hose further comprises a proximal connection module including a first side configured to attach to an outlet of a loose fill insulation blowing machine and a second side attached to the proximal end of the first hose section. For example, loose fill insulation hose 120, shown in FIGS. 1A and 1B, includes a proximal connection module 185 that has a first side 186 and a second side 187. The second side 187 of the proximal connection module 185 is attached to the proximal end 151 of first hose section 150 while the first side 186 of proximal connection module 185 is attached to an outlet 106 of loose fill insulation blowing machine 102. Accordingly, proximal connection module 185 is at the proximal end of loose fill insulation hose 120 and receives the loose fill insulation as it leaves blowing machine 102. In some embodiments, the proximal connection module may include one or more connector sections having projections and/or constricted openings, as described above. Accordingly, loose fill insulation passing through the proximal connection module may be conditioned toward the beginning of the hose.

Alternatively, in other embodiments, the loose fill insulation hose includes a proximal connection module and a coupler configured to attach to an outlet of the loose fill insulation blowing machine. In such an embodiment, a first side of the proximal connection module is attached to the coupler and a second side of the proximal connection module is attached to the proximal end of a hose section. In some embodiments, the coupler is used to enable the connection between the loose fill insulation hose and the outlet of the blowing machine. For example, in some embodiments, the coupler has two female couplings to receive male couplings on the blowing machine outlet and proximal connection module. In other embodiments, the coupler has two male couplings. In still yet other embodiments the coupler may contain one male and one female coupling on opposite ends. Further, in some embodiments, the coupling changes the diameter of the opening so that a hose and blowing machine outlet of different diameters can be connected.

In other embodiments the loose fill insulation hose does not include a proximal connection module. For example, in some embodiments, one of the hose sections is either directly attached to the blowing machine outlet or is attached to the blowing machine outlet using a coupler.

In certain embodiments of the loose fill insulation hose as otherwise described herein, the first hose section and the second hose section are part of a group of hose sections that are connected in series, and the loose fill insulation hose further comprises a distal connection module attached at a distal end of the hose. For example, loose fill insulation hose 120 shown in FIG. 1 includes a group of hose sections that includes first hose section 130, second hose section 140 and third hose section 150 connected in series. In other embodiments, the hose may include more than three hose sections, such as 4, 5, or more hose sections connected in series. At the distal end of loose fill insulation hose 120 is a distal connection module 190. In some embodiments, the distal connection module may include one or more connector sections having projections and/or constricted openings, as described above. Accordingly, loose fill insulation passing through the distal connection module may be conditioned toward the end of the hose.

In some embodiments, the loose fill connection hose may include an outlet nozzle attached to the distal connection module. Still, in other embodiments, the loose fill insulation module may exclude a distal connection module. For example, in some embodiments, an outlet nozzle is connected directly to a hose section. Further, in other embodiments, the end of the hose is formed by a hose section, and neither a connection module nor an outlet nozzle is included at the end.

In certain embodiments of the loose fill insulation hose as otherwise described herein, the projections of the first connector section vary in size. For example, in some embodiments, the projections extend to varying depths from the outer surface portion. Likewise, in some embodiments, the projections vary in size along the length of the respective connection module. Further, in some embodiments, the projections vary in all dimension, while in other embodiments, the projections have some consistent dimensions and some varying dimensions.

The projections may have various different shapes. For example, in some embodiments, the projections have triangular, trapezoidal or square shapes. Further, in some embodiments, the projections have conical or cylindrical shapes. Further, the projections may have other shapes. It should be understood that the shapes described herein refer to a characteristic of the projection from one or more perspective.

In certain embodiments of the loose fill insulation hose as otherwise described herein, each of the projections of the first connector section forms a spike that extends into the path. For example, the projections 268 of connection module 260 are formed as spikes that extend from the major surface portion 267 into the path 263. In other embodiments, the projections may have other forms. For example, in some embodiments, the projections have ring shapes as in connection module 160, shown in FIGS. 1C and 1D. The projections may also take other forms.

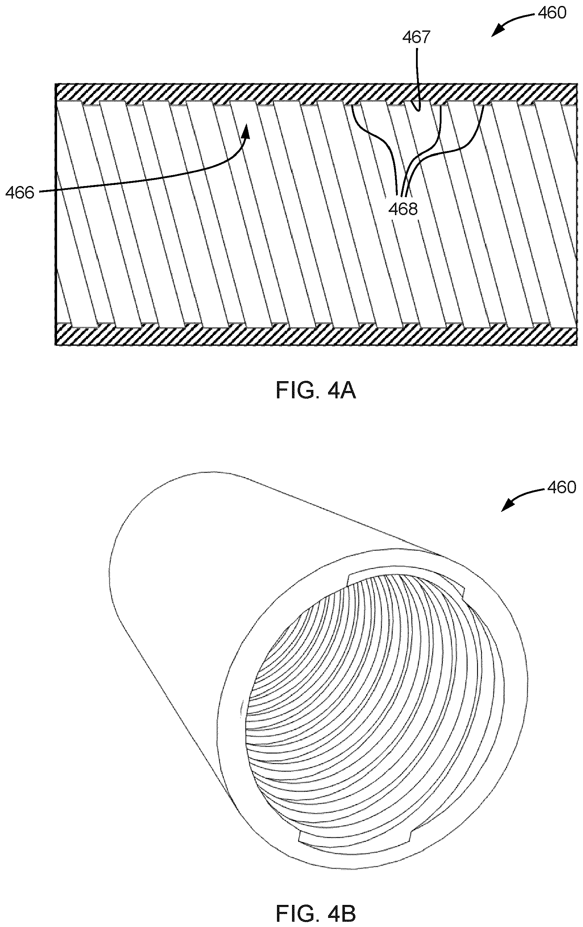

In certain embodiments of the loose fill insulation hose as otherwise described herein, the annular projections are perpendicular to the length of the connection module. For example, each of the projections 168, 169 of connection module 160 is aligned around an axis of the connection module 160 so that the annular projections are perpendicular to the length of connector section 164. In other embodiments, the annular projections are tilted with respect to the length of the connection module. For example, connection module 460, shown in FIGS. 4A and 4B, includes an interior surface 466 with a major surface portion 467 and plurality of projections 468 that extend inward from major surface portion 467 along the length of connection module 460. Each of the projections 468 is tilted with respect to the axis that runs along the length of connection module 460. A connector section including projections, such as that shown in FIG. 4, may be incorporated into a connection module that also includes a second connector section with a restricted opening, or may form a stand-alone connection module.

In certain embodiments of the loose fill insulation hose as otherwise described herein, the first tubular body of the first hose section includes projections that extend inward into the path. Such hose configurations are described, for example, in U.S. Patent No. 7,284,573, which is hereby incorporated by reference herein in its entirety. In some embodiments, the first tubular body of the first hose section extend into the path by a first radial depth and at least some of the projections of the first connector section extend into the path by a second radial depth that is at least 3 times larger than the first radial, e.g., at least 5 times larger.

In certain embodiments of the loose fill insulation hose as otherwise described herein, the diameter of the interior surface of the first connection module is at least 1.5 inches, e.g., at least 2 inches, e.g., at least 2.5 inches. In some embodiments, the diameter of the interior surface of the first connection module is no more than 8 inches, e.g., no more than 6 inches, e.g., no more than 4 inches. For example, in some embodiments, the diameter of the interior surface of the first connection module is in a range from 1.5 inches to 8 inches, e.g., from 2 inches to 6 inches; or from 1.5 inches to 4 inches, e.g., from 2.5 inches to 3.5 inches. Further, in some embodiments each of the connection modules has the same inner diameter. In other embodiments, some of the connection modules have different inner diameters.

In certain embodiments of the loose fill insulation hose as otherwise described herein, the first side of the first connection module is a male fitting that is inserted into the distal end of the first hose section, and the second side of the first connection module is a male fitting that is inserted into the proximal end of the second hose section. For example, as shown in FIG. 1A, each of the first side 161 and second side 162 of first connection module 160 are formed as a male fitting that is inserted into the first hose section 130 and second hose section 140, respectively. In other embodiments, the first connection module includes female fittings and the hose sections include male fittings that are inserted into the connection module. Further, in some embodiments, the first connection module includes a male fitting on one side and a female fitting on the other side. Such a configuration allows connection between two adjacent connection modules without an intervening hose section or coupler.

In certain embodiments of the loose fill insulation hose as otherwise described herein, the first hose section is corrugated. For example, first hose section 130 of loose fill insulation hose 120, as shown in FIGS. 1A-1C, has a corrugated tubular body 133. Corrugated hose can have increased flexibility and strength compared to similar hose with a smooth outer surface. The other hose sections of loose fill insulation hose 120 are similarly corrugated, as shown in FIGS. 1A and 1B. In other embodiments, the hose section may have a different profile, such as smooth.

In certain embodiments of the loose fill insulation hose as otherwise described herein, the first hose section has a length of at least 10 feet, e.g., at least 15 feet, e.g., at least 20 feet. In some embodiments, the first hose section has a length of no more than 100 feet, e.g., no more than 80 feet, e.g., no more than 60 feet, e.g., about 50 feet. For example, in some embodiments, the first hose section has a length in a range from 10 feet to 100 feet, e.g., from 12 feet to 80 feet, e.g., from 15 feet to 60 feet, e.g., from 20 feet to 50 feet. In some embodiments each of the hose sections has the same length. In other embodiments the hose sections of the loose fill insulation hose have different lengths.

In certain embodiments of the loose fill insulation hose as otherwise described herein, an inner diameter of the first hose section is at least 1.5 inches, e.g., at least 2 inches, e.g., at least 2.5 inches. In certain embodiments of the loose fill insulation hose as otherwise described herein, an inner diameter of the first hose section is no more than 8 inches, e.g., no more than 6 inches, e.g., no more than 4 inches. For example, in some embodiments, the inner diameter of the first hose section is in a range from 1.5 inches to 8 inches, e.g. from 2 inches to 6 inches, e.g., from 2.5 inches to 4 inches. Further, in some embodiments each of the hose sections has the same inner diameter. In other embodiments, some of the hose sections have different inner diameters.

In another aspect, the disclosure provides a system for delivering loose fill insulation that includes a loose fill insulation blowing machine and the loose fill insulation hose of the disclosure. The blowing machine includes a hopper configured to receive loose fill insulation, an outlet, and a blower operable to expel loose fill insulation through the outlet. The loose fill insulation hose is attached to the outlet of the loose fill insulation blowing machine.

Such a system is schematically shown in FIGS. 1A and 1B. Loose fill insulation system 100 includes a blowing machine coupled to loose fill insulation hose 120, which is described in detail above. Loose fill insulation blowing machine 102 includes a hopper 104 configured to receive insulation. Blowing machine 102 conditions the insulation, which is then delivered to hose 120 through outlet 106 through the use of a blower 108. The blower 108 circulates air through blowing machine 102 to carry the loose fill insulation through hose 120 to an installation site at the distal end of the hose.

In certain embodiments of the system of the disclosure, the hopper includes a shredder box configured to break apart the loose fill insulation. For example, hopper 104 includes a shredder box 110 including a plurality of shredding members that rotate through the packed insulation to break the insulation apart and "open" the insulation.

In certain embodiments of the system of the disclosure, the loose fill insulation blowing machine includes an air lock configured to transfer the loose fill insulation to the outlet. For example, the insulation in system 100 moves from the shredder box 110 through a stator bar 112 that includes tines for further opening the insulation and into an air lock 114. As shown in FIG. 2, the air lock 114 includes a plurality of sealed vanes 116 (see FIG. 1B) that rotate around a drum and transport the insulation to an area where the air flow from blower 108 carries the insulation through outlet 106. The air lock 114 directs the air flow out through the outlet 106 rather than back into the shredder box 110.

In another aspect, the disclosure provides a method of delivering loose fill insulation to an installation site using the system of the disclosure. The method includes expelling loose fill insulation from a blowing machine into the loose fill insulation hose. The loose fill insulation is conveyed through the loose fill insulation hose to the installation site.

Such a method is depicted in FIG. 1A. Packed insulation 101 is initially introduced into blowing machine 102 via the hopper 104. The packed insulation 101 is broken up and opened by the shredder box 110 and stator bar 112 as it moves into air lock 114. The air lock 114 then moves the insulation to a position where air from blower 108 can carry the insulation through hose 120 to an installation site at the distal end of hose 120, where the loose fill insulation 118 is delivered to the installation site.

In certain embodiments of the method as otherwise described herein, the method further includes opening the loose fill insulation that is passing through the first connection module using projections extending inward into the path between the first hose section and the second hose section. For example, as the loose fill insulation in system 100 passes through first connection module 160, the projections 168 interact with the insulation and further open the insulation, as explained in more detail above.

In certain embodiments of the method as otherwise described herein, the loose fill insulation includes a fibrous material. For example, in some embodiments, the loose fill insulation is a fiberglass insulation, a cellulose insulation, a stonewool insulation, a plastic fiber insulation, a natural wool insulation, a natural cotton insulation, or another insulation including fibers. In other embodiments, the loose fill insulation includes small insulating components, such as a foam bead insulation or a plastic particle insulation.

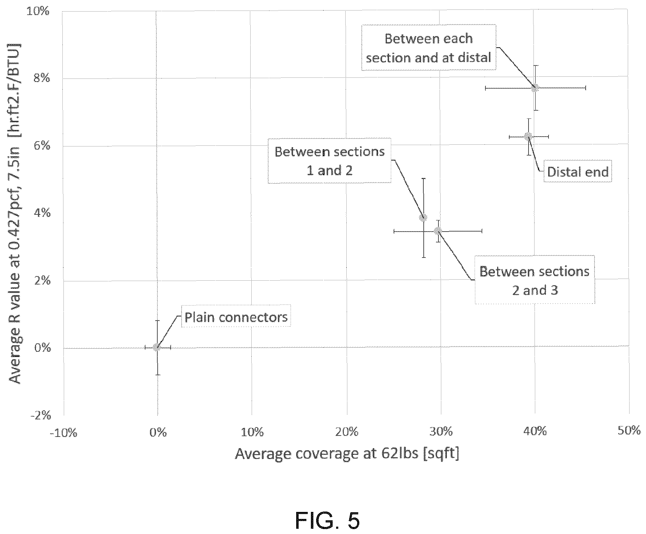

As stated above, the first connector section including projections and the second connector section including a constricted opening may be located at various positions along the length of the loose fill insulation hose. The position of the connector sections may impact the performance of insulation that is installed using the loose fill insulation hose. For example, FIG. 5 shows the R value at 0.427pcf, 7.5in (hr·ft²·F°/BTU) as measured in accordance with ASTM C518 and total coverage at 12" (sqft) of 62 lbs of loose fill insulation installed using a blowing machine and various loose fill insulation hose configurations. Each of the loose fill insulation hose configurations includes three 50 ft hose sections, each having a 3 inch diameter. The hose sections are connected either by standard tubular connectors (i.e., with a uniform circular inner wall) or with an enhanced connection module having the configuration of connection module 160 shown in FIGS. 1C and 1D. Specifically, the enhanced connection module includes four smaller annular projections that form a 2 inch diameter opening. Each of the smaller projections is followed by a larger annular projection that forms a 1.5 inch diameter opening. (In accordance with the foregoing description, the final larger annular projection forms a constricted opening of a second connector section.)

FIG. 5 shows data for various hose configurations when insulating an attic to a depth of 12 inches using 62 lbs. of loose fill insulation. The data compares hoses using at least one instance of the above-described enhanced connection module with a hose using only standard connection modules to couple the hose sections. Further, the hoses that include enhanced connection modules in only certain locations utilize standard connection modules in the rest of the hose. The standard connection modules have a smooth interior surface of constant diameter that extends over the length of the standard connection module. Further, the interior diameter of the standard connection module is the same as the diameter of the major surface portion of the interior surface of the first connection section of the enhanced connection module.

As shown, compared to the hoses with only standard connection modules, the hoses with the enhanced connection modules yield increased R value and substantially increased coverage. Consistent with the description above, "section 1" is the hose section positioned toward the distal end of the hose and "section 3" is the hose section positioned near the blowing machine. For example, each of the hoses including at least one of the enhanced connection module yields an increase in average R value of at least 2%. Likewise, each of the hoses including at least one enhanced connection module yields an increase in coverage of at least 20%.

The data in FIG. 5 also shows further gains in R value and coverage when including the enhanced connection module at the distal end of the hose compared to positioning the enhanced connection module between hose sections. For example, each of the hoses including an enhanced connection module at the distal end yields an increased R value of at least 4% and an increased coverage of at least 30%. Moreover, positioning an enhanced connection module at each position along the hose length yields further improvement in R value and may also provide increased coverage. However, the present inventors found that including the enhanced connection module at the distal end of the hose resulted in the insulation projecting out from the hose further than when the enhanced connection module was separated from the distal end of the hose. This increased arc length of the insulation exiting the hose can complicate installation in certain scenarios, such as in enclosed spaces like an attic. Accordingly, in some embodiments, the second connector section including a constricted opening is spaced from a distal end of the hose by at least 3 feet, e.g., by at least 6 feet. The distance between the constricted opening and the distal end of the hose can help reduce the arc length of the insulation exiting the hose. On the other hand, in some embodiments, a larger arc length may be desirable, and the constricted opening may be included near or at the end of the hose.

It will be apparent to those skilled in the art that various modifications and variations can be made to the processes and devices described here without departing from the scope of the disclosure. Thus, it is intended that the present disclosure cover such modifications and variations of this invention provided they come within the scope of the appended claims and their equivalents.

### EMBODIMENTS

Embodiment 1. A loose fill insulation hose comprising a plurality of tubular sections coupled together so as to form a conduit configured to convey loose fill insulation along a path from a blowing machine to an installation site, the tubular sections comprising:
a first hose section extending from a proximal end to a distal end, the first hose section including a flexible body that surrounds the path and forms an opening with a first cross-sectional area;
a first connector section coupled to the first hose section, the first connector section comprising a first tubular body including a first interior surface that surrounds the path, wherein the first interior surface includes a major surface portion and a plurality of projections that extend inward from the major surface portion, wherein the projections are configured to open the loose fill insulation; and
a second connector section coupled to the first hose section, the second connector section comprising a second tubular body including a second interior surface that surrounds the path, the second interior surface including a constricted opening with a second cross-sectional area that is no more than 50% of the first cross-sectional area.

Embodiment 2. The loose fill insulation hose according to embodiment 1, wherein the opening formed by the tubular body of the first hose section is circular and has a first diameter, wherein the constricted opening of the interior surface of the second connector section is circular and has a second diameter, and wherein the second diameter is no more than 70% of the first diameter, e.g., no more than 65% of the first diameter, e.g., no more than 62% of the first diameter, e.g., no more than 50% of the first diameter.

Embodiment 3. The loose fill insulation hose according to embodiment 1 or embodiment 2, wherein the first connector section is part of a first connection module.

Embodiment 4. The loose fill insulation hose according to embodiment 3, wherein the first connection module is attached to the proximal end of the first hose section.

Embodiment 5. The loose fill insulation hose according to embodiment 3, wherein the first connection module is attached to the distal end of the first hose section.

Embodiment 6. The loose fill insulation hose according to embodiment 5, wherein the first connection module is disposed at a distal end of the hose.

Embodiment 7. The loose fill insulation hose according to any of embodiments 3 to 6, wherein the second connector section is part of the first connection module.

Embodiment 8. The loose fill insulation hose according to embodiment 7, wherein the second connector section is downstream of the first connector section.

Embodiment 9. The loose fill insulation hose according to embodiment 1 to 6, wherein the second connector section is part of a second connection module.

Embodiment 10. The loose fill insulation hose according to embodiment 9, wherein the second connection module is downstream of the first connection module.

Embodiment 11. The loose fill insulation hose according to embodiment 10, wherein the second connection module is attached to the distal end of the first hose section.

Embodiment 12. The loose fill insulation hose according to any of embodiments 1 to 10, wherein the first hose section is one of a group of hose sections that are connected in series using a group of connection modules.

Embodiment 13. The loose fill insulation hose according to any of embodiments 1 to 12, wherein the constricted opening of the second connector section is formed by a circumferential projection that extends inward into the path.

Embodiment 14. The loose fill insulation hose according to any of embodiments 1 to 13, wherein the plurality of projections of the first connector section includes a series of annular projections along a length of the first connector section.

Embodiment 15. The loose fill insulation hose according to embodiment 14, wherein the series of annular projections includes smaller projections that extend into the path by a first radial depth and larger projections that extend into the path by a second radial depth that is greater than the first radial depth.

Embodiment 16. The loose fill insulation hose according to embodiment 15, wherein the smaller projections and larger projections alternate along the length of the first connector section.

Embodiment 17. The loose fill insulation hose according to any of embodiments 14 to 16, wherein at least some of the annular projections are tapered so as to have a reduced thickness at a radially inner edge.

Embodiment 18. The loose fill insulation hose according to embodiment 17, wherein the tapered annular projections include a conical upstream surface.

Embodiment 19. The loose fill insulation hose according to any of embodiments 15 to 19, wherein each of the larger projections has the same geometry.

Embodiment 20. The loose fill insulation hose according to embodiment 19, wherein each of the smaller projections has the same geometry.

Embodiment 21. The loose fill insulation hose according to any of embodiments 1 to 20, wherein the first tubular body of the first hose section includes projections that extend inward into the path.

Embodiment 22. The loose fill insulation hose according to embodiment 21, wherein the projections of the first tubular body of the first hose section extend into the path by a first radial depth and at least some of the projections of the first connector section extend into the path by a second radial depth that is at least 3 times larger than the first radial, e.g., at least 5 times larger.

Embodiment 23. A system for delivering loose fill insulation, the system comprising:
a loose fill insulation blowing machine comprising:
   a hopper configured to receive loose fill insulation,
   an outlet, and
   a blower operable to expel loose fill insulation through the outlet; and
a loose fill insulation hose according to any of embodiments 1 to 28 attached to the outlet of the loose fill insulation blowing machine.

Embodiment 24. A method of delivering loose fill insulation to an installation site using the system according to embodiment 23, the method comprising:
expelling loose fill insulation from a blowing machine into the loose fill insulation hose; and
conveying the loose fill insulation through the loose fill insulation hose to the installation site.

Embodiment 25. A method of delivering loose fill insulation to an installation site using the system according to embodiment 23, the method comprising:
expelling loose fill insulation from a blowing machine into the loose fill insulation hose; and
conveying the loose fill insulation through the loose fill insulation hose to the installation site,
wherein the delivered loose fill insulation has an increased R value of at least 1%, e.g., at least 1.5%, e.g., at least 2%, compared to an unmodified system using the same blowing machine and operating parameters with an unmodified hose,
wherein the unmodified hose includes the same hose sections as the loose fill insulation hose that are coupled with connection modules having a smooth interior surface of constant diameter and an interior diameter that is the same as the major surface portion of the first interior surface of the first connection section.

Embodiment 26. A method of delivering loose fill insulation to an installation site using the system according to embodiment 23, the method comprising:
expelling loose fill insulation from a blowing machine into the loose fill insulation hose; and
conveying the loose fill insulation through the loose fill insulation hose to the installation site,
wherein the delivered loose fill insulation has an increased coverage of at least 10%, e.g., at least 20%, e.g., at least 30%, compared to an unmodified system using the same blowing machine and operating parameters with an unmodified hose,
wherein the unmodified hose includes the same hose sections as the loose fill insulation hose that are coupled with connection modules having a smooth interior surface of constant diameter and an interior diameter that is the same as the major surface portion of the first interior surface of the first connection section.

Embodiment 27. A connection module for a loose fill insulation hose, the connection module comprising:
a tubular body including an interior surface that surrounds a path for conveying loose fill insulation, wherein the interior surface includes a major surface portion and a series of annular projections along a length of the tubular body that extend inward from the major surface portion, wherein the major surface portion forms an opening having a first cross-sectional area, wherein the series of annular projections includes smaller projections and larger projections that extend into the path by a radial depth that is greater than the smaller projections, and wherein at least one of the larger projections forms a constricted opening with a second cross-sectional area that is no more than 50% of the first cross-sectional area.

Embodiment 28. The connection module according to embodiment 27, wherein the smaller projections and larger projections alternate along the length of the first connector section.

Embodiment 29. The connection module according to embodiment 27 or embodiment 28, wherein each of the smaller projections extends into the path by the same radial depth.

Embodiment 30. The connection module according to any of embodiments 27 to 29, wherein each of the larger projections extends into the path by the same radial depth.

Embodiment 31. The connection module according to any of embodiments 27 to 30, wherein at least some of the annular projections are tapered so as to have a reduced thickness at a radially inner edge.

Embodiment 32. The connection module according to embodiment 31, wherein the tapered annular projections include a conical upstream surface.

## Claims

1. A loose fill insulation hose comprising a plurality of tubular sections coupled together so as to form a conduit configured to convey loose fill insulation along a path from a blowing machine to an installation site, the tubular sections comprising:
a first hose section extending from a proximal end to a distal end, the first hose section including a flexible body that surrounds the path and forms an opening with a first cross-sectional area;
a first connector section coupled to the first hose section, the first connector section comprising a first tubular body including a first interior surface that surrounds the path, wherein the first interior surface includes a major surface portion and a plurality of projections that extend inward from the major surface portion, wherein the projections are configured to open the loose fill insulation; and
a second connector section coupled to the first hose section, the second connector section comprising a second tubular body including a second interior surface that surrounds the path, the second interior surface including a constricted opening with a second cross-sectional area that is no more than 50% of the first cross-sectional area.

2. The loose fill insulation hose according to claim 1, wherein the first connector section and second connector section are part of a first connection module,
wherein the plurality of projections of the first connector section comprises a series of annular projections along a length of the first connector section including smaller projections that extend into the path by a first radial depth and larger projections that extend into the path by a second radial depth that is greater than the first radial depth, and
wherein the constricted opening of the second connector section is formed by a circumferential projection that extends inward into the path.

3. The loose fill insulation hose according to claim 2, wherein the smaller projections and larger projections alternate along the length of the first connector section.

4. The loose fill insulation hose according to any of claim 2 or claim 3, wherein at least some of the annular projections are tapered so as to have a reduced thickness at a radially inner edge.

5. The loose fill insulation hose according to claim 4, wherein the tapered annular projections include a conical upstream surface.

6. The loose fill insulation hose according to any of claims 2 to 5, wherein each of the larger projections has the same geometry and wherein each of the smaller projections has the same geometry.

7. The loose fill insulation hose according to any of claims 2 to 6, wherein the first connection module is attached to the proximal end of the first hose section.

8. The loose fill insulation hose according to any of claims 2 to 6, wherein the first connection module is attached to the distal end of the first hose section.

9. The loose fill insulation hose according to any of claims 1 to 8, wherein the opening formed by the tubular body of the first hose section is circular and has a first diameter, wherein the constricted opening of the interior surface of the second connector section is circular and has a second diameter, and wherein the second diameter is no more than 70% of the first diameter, e.g., no more than 65% of the first diameter, e.g., no more than 62% of the first diameter, e.g., no more than 50% of the first diameter.

10. The loose fill insulation hose according to any of claims 1 to 9, wherein the first hose section is one of a group of hose sections that are connected in series using a group of connection modules.

11. A system for delivering loose fill insulation, the system comprising:
a loose fill insulation blowing machine comprising:
a hopper configured to receive loose fill insulation,
an outlet, and
a blower operable to expel loose fill insulation through the outlet; and
a loose fill insulation hose according to any of claims 1 to 10 attached to the outlet of the loose fill insulation blowing machine.

12. A method of delivering loose fill insulation to an installation site using the system according to claim 11, the method comprising:
expelling loose fill insulation from a blowing machine into the loose fill insulation hose; and
conveying the loose fill insulation through the loose fill insulation hose to the installation site.

13. The method according to claim 12, wherein the delivered loose fill insulation has an increased R value of at least 1%, e.g., at least 1.5%, e.g., at least 2%, compared to an unmodified system using the same blowing machine and operating parameters with an unmodified hose, and
wherein the unmodified hose includes the same hose sections as the loose fill insulation hose that are coupled with connection modules having a smooth interior surface of constant diameter and an interior diameter that is the same as the major surface portion of the first interior surface of the first connection section.

14. The method according to claim 12, wherein the delivered loose fill insulation has an increased coverage of at least 10%, e.g., at least 20%, e.g., at least 30%, compared to an unmodified system using the same blowing machine and operating parameters with an unmodified hose, and
wherein the unmodified hose includes the same hose sections as the loose fill insulation hose that are coupled with connection modules having a smooth interior surface of constant diameter and an interior diameter that is the same as the major surface portion of the first interior surface of the first connection section.

15. A connection module for a loose fill insulation hose, the connection module comprising:
a tubular body including an interior surface that surrounds a path for conveying loose fill insulation, wherein the interior surface includes a major surface portion and a series of annular projections along a length of the tubular body that extend inward from the major surface portion, wherein the major surface portion forms an opening having a first cross-sectional area, wherein the series of annular projections includes smaller projections and larger projections that extend into the path by a radial depth that is greater than the smaller projections, and wherein at least one of the larger projections forms a constricted opening with a second cross-sectional area that is no more than 50% of the first cross-sectional area.
